# EUROPEAN PATENT SPECIFICATION

(11) **EP 3 301 603 B1**
(45) Date of publication and mention of the grant of the patent: **29.04.2026**
(21) Application number: 17193574.5
(22) Date of filing: 27.09.2017
(51) Int. Cl.: G06F 21/62

(54) **IMPROVED SEARCH FOR DATA LOSS PREVENTION**
VERBESSERTE SUCHE FÜR DIE VERHINDERUNG VON DATENVERLUST
RECHERCHE AMÉLIORÉE POUR LA PRÉVENTION DE PERTE DE DONNÉES

(30) Priority: 03.10.2016 CH 13092016
(43) Date of publication of application: 04.04.2018
(73) Proprietor: Swisscom AG, 3050 Bern (CH)
(72) Inventor: Lotzer, Hans-Joachim, 8307 Effretikon (CH); Haller, Klaus Gerhard, 8057 Zürich (CH)
(74) Representative: P&TS SA (AG, Ltd.)

(56) References cited:
- EP-A1- 2 942 731
- US-A1- 2012 226 677
- US-A1- 2013 054 650
- US-A1- 2016 034 305

## Description

### Field of the invention

The present invention concerns a method, an apparatus and a computer program for data loss prevention.

### Description of related art

The technical protection of data in a company or any other organisation gets more and more important, because the loss of data could lead to violation of legal requirements or to a disadvantage in the market. Data loss prevention (DLP) tools are known to manage large amounts of data and to detect the risk of data leaks. DLP tools scan data for potentially sensible data, e.g. by keyword searches or rule based searches. The risk of data loss is present for data at rest, e.g. SharePoint servers, databases, or other kinds of repositories, for data in motion which are transferred within the company and to outside recipients via the network, e.g., by emails, FTP, or social media, and for data at endpoints like personal computers, laptops, tablet, smartphones, etc. Depending on the DLP tool, it considers data at rest, e.g. large databases, central repositories, etc.. Especially, data at rest, e.g. large databases, and often also data in motion are significant. Scanning through those data is very cumbersome and time- and resource- consuming. Therefore, most existing DLP tools scan only a part of the data which has the drawback that there remains a high risk of not detected sensible data.

In US2012/0226677 a first block of structured data is analysed to detect the type of information stored in the first block. When a certain information is searched in the structured data, only those parts of the other blocks are searched which are relevant for the certain information. However, this approach would not detect a large amount of sensible data, if the structured data contain two different structures or store different types of information in the same fields, e.g., when new releases of an application adapt the data models in the database.

### Brief summary of the invention

It is therefore an object to find a method for data loss prevention which searches or scans through the data in a more reliable and still efficient way.

This is solved by selecting a statistically representative subset of records to scan fields of the record for sensitive information. This yields a reliable basis for detecting the categories in which potential sensitive information are contained. In addition, a likelihood is computed for how likely a sensitive information is contained in each category. On the basis of this likelihood, the search for the sensitive information can be reduced to a subset of categories in which the complete data are scanned for the sensitive information without reducing the reliability of the results.

The dependent claims refer to further advantageous embodiments.

### Brief Description of the Drawings

The invention will be better understood with the aid of the description of an embodiment given by way of example and illustrated by the figures, in which:
Fig. 1 shows an example of structured and/or semi-structured data.
Fig. 2 shows the selection of a subset of records of the data in the example of Fig. 1.
Fig. 3 shows the scanning result for sensitive information in the example of Fig. 1.
Fig. 4 shows the selection of a subset of classes in the example of Fig. 1.

### Detailed Description of possible embodiments of the Invention

The present method or computer program for data loss prevention (DLP) is applicable on all kind of structured or semi-structured data. Examples of structured data are databases, lists, etc.. An example for semi-structured data are XML data. The data have a plurality of records and a plurality of categories. The number of records is normally very high such that the amount of data is very large and necessitates a large effort to search through the whole content of the data, in particular if the searched information is abstract. Preferably, the records are stored in an ordered manner such that the subsequent record (directly neighbouring record in one direction) of each record is well defined. Each record comprises a plurality of fields belonging to different categories. A category of fields refers to a structural similarity or a common attribute of the fields in different records. Preferably, the fields of the same category of fields for different records have the same size. However, it is also possible that the fields of the same class of different records have different sizes. It is further possible that some records have fields of categories not common to all records.

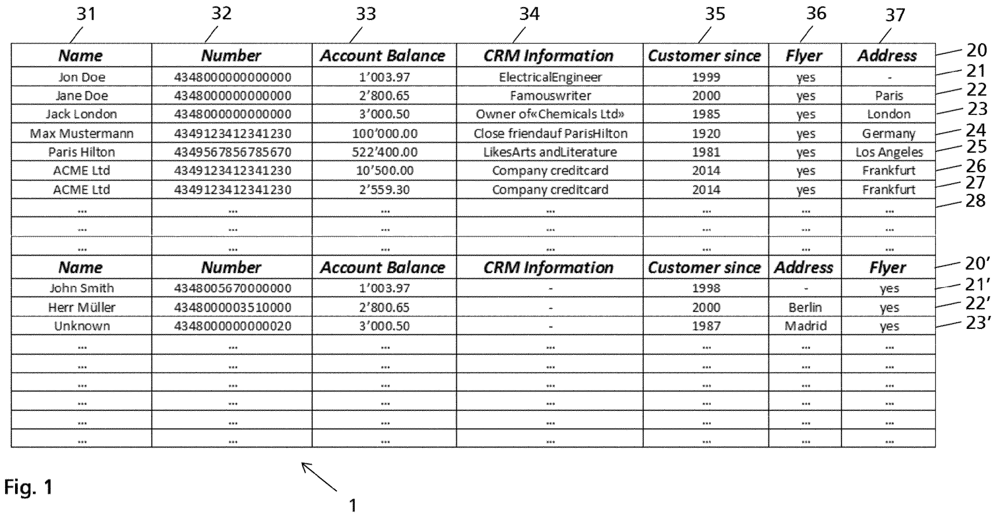

Fig. 1 shows the example of a list of data. In this case, the rows 21, 22, 23, ... correspond to records, and the columns 31, 32, 33, 34, 35, 35, 37 correspond to categories of fields. Each record or row 21, 22, 23, ... has a field for each column 31, 32, 33, 34, 35, 35, 37 and/or vice versa. Obviously, the columns 31, 32, 33, 34, 35, 35, 37 could be records and the rows 21, 22, 23, ... could be categories of fields as well. The invention will be explained on the example of the list shown in Fig. 1. However, the invention shall not be restricted to lists, and everything explained for lists 1, rows 21, 22, 23, ... and columns 31, 32, 33, 34, 35, 35, 37 shall equivalently hold for structured and/or semi-structured data in general, records and categories of fields analogously. In the shown example, the list 1 has changed over time its structure in order to show better the benefit of the present method. However, the invention is also applicable to data with homogenous structures. While a first structure is used in a first portion of rows 21, 22, ..., a second structure is used in a second portion of the rows 21', 22', 23', ... . In the first portion, column 36 relates to "Flyer" and column 37 to "Address", while this is inverted in the second portion of rows 21', 22', 23', ... .

The data, here the list 1, is stored in a storage. For data at rest, this might be a hard disc, a storage centre, or anything similar. For data in motion, the storage might be a short term storage (buffer) for buffering the data for analysis.

The method described in the following is performed on those data stored in the storage by circuitry or a processor. A processor and/or circuitry might be a single processor or circuit, but could also comprise a plurality of processors and/or circuits being connected between each other to perform the mentioned method. Multiple processors and/or circuits could be close together in a common housing or building, but could also be remote from each other constituting a cloud of processors and/or circuits. The terms processor and/or circuit are used here equivalently and should both comprise the meaning of the respectively other one. The method for data loss prevention (DLP) will be described in the following.

In a first step, a subset of records of the data is selected. Preferably, the subset should statistically represent all records of the data. Therefore, the subset of records should be a number of non-consecutive records. Preferably, the subset of records should comprise at least two records between which the data comprise a plurality of records which are not included in the subset. This allows to obtain a statistically representative subset of records. Preferably, the selected records of the subset of records should be well distributed over the data 1. This is obtained by selecting the records randomly on the basis of a certain statistical distribution. E.g. a uniform distribution could be used. However, it is also possible to select the records by a fix function, e.g. by taking every tenth record.

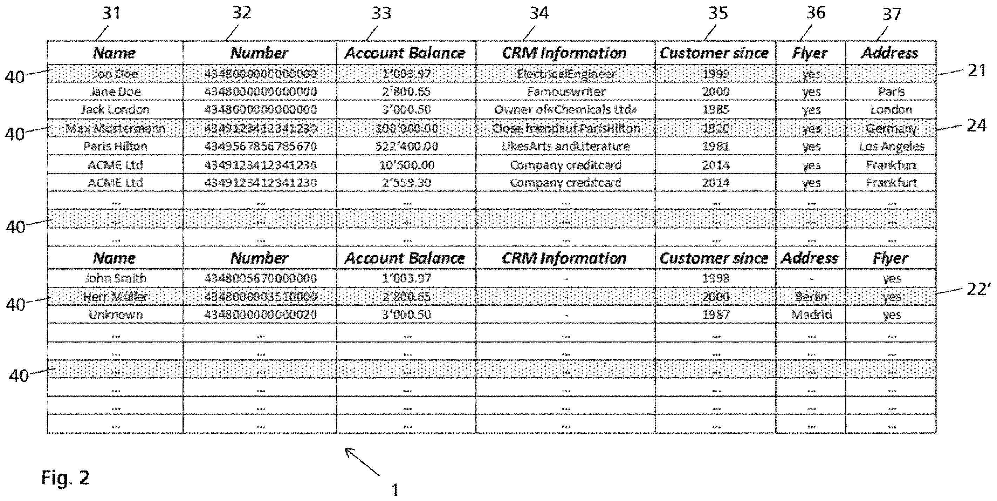

Fig. 2 shows a random selection of rows 21, 24, ... as subset 40 of records. Due to this random selection of the subset 40, it contains rows 21, 24, ... of the first portion of rows 21, 22, 23, ... and rows 22', ... of the second portion of rows 21', 22', ....

In a second step, the fields of the selected subset 40 of categories are scanned for sensitive information. Sensitive information are for example personal information like names, addresses, payment details like credit card numbers and other personal information or secret information. The sensitive information can be general, i.e. a type of sensitive information like names in general, or can be specific, i.e. a specific sensitive information like a specific credit card number of a client. The scan for sensitive information can be based on rules (e.g. to detect in general a credit card number or IBAN number) or can be based on keywords. Keywords and/or rules should contain also search phrases/terms, search lists and/or search patterns. For example a name search could comprise for example also the search phrase or keyword "Oil & Gas Ltd". For a type of information generally a rule or a set of keywords or dictionary (e.g. the most common names) is searched.

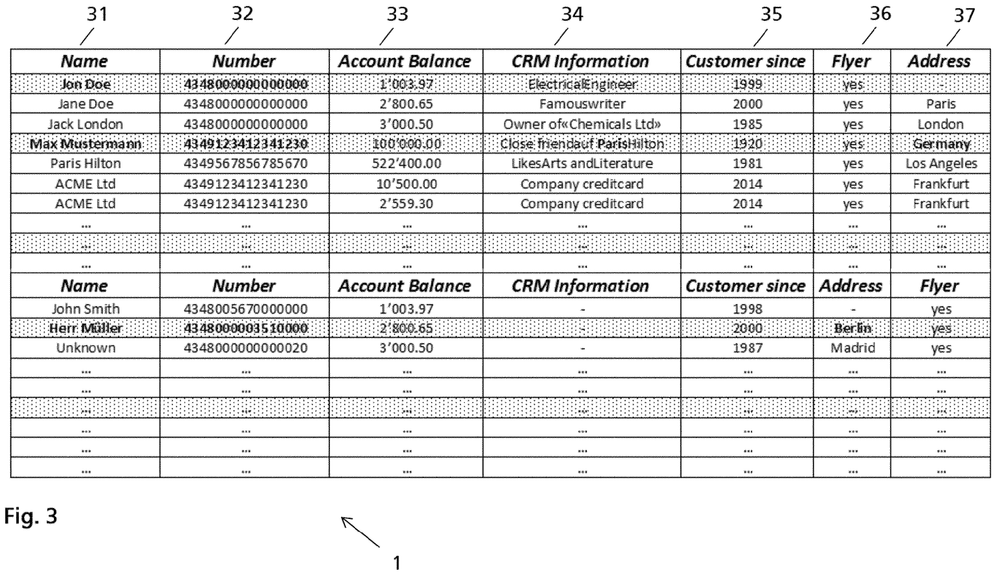

In a preferred embodiment, the step of scanning for sensitive information comprises the search of at least two types of sensitive information. In Fig. 3 a scanning result is shown where in the subset 40 of categories names in general as a first type of sensitive information, credit card numbers in general as a second type of sensitive information, locations in general as a third type of sensitive information are searched. Names could be searched by searching for all keywords in a dictionary containing as keywords the most common names. Credit card numbers could be searched by a rule identifying 16 digits. Locations could be searched by searching for all keywords in a dictionary containing as keywords the most common locations. In the first column 31, there were found names. In the second column 32, there were found credit card numbers. In the fourth column 34, there was found one field in which the keyword "Paris" was found which could be a name or a location. In the second portion of rows in the sixth column 36 were found locations and in the first portion of the seventh column 37 were found as well locations. Since some keywords and/or rules could indicate different type of sensitive information, those keywords and/or rules could be associated to more than one type of sensitive information. For example, the keyword "Paris" found in the fourth column 34 could indicate a location or a name. Obviously, those are only examples for types of sensitive information which shall not limit the invention.

Instead of searching type of sensitive information, it is also possible to scan the subset of records for concrete sensitive information like the names and information of a client data base.

In a third step, for each category, a likelihood to contain the sensitive information is computed on the basis of the scanning result. The likelihood to contain the sensitive information could be calculated on the basis of the fields of the subset 40 of records containing the sensitive information, e.g. the number of fields containing the sensitive information divided by the number or records/rows contained in the subset 40 of records. In a more complex embodiment, it could be determined for each field a likelihood to contain sensitive information or a certain type of information. The likelihood to contain a sensitive information could then be calculated on the basis of the likelihood of each field of the subset 40 of records to contain the sensitive information. The likelihood for each field to contain sensitive information can be calculated for example by associating to each rule and/or each keyword for searching a certain type of sensitive information a likelihood to contain this searched type of sensitive information. If a keyword and/or a rule is associated to different types of sensitive information, different likelihoods could be related to each association. In the example of above, Paris could indicate with 20% probability a name and with 70% a location. On the basis of those likelihoods that a field of the subset 40 of records contains a certain type of sensitive information, the likelihood that this type of sensitive information is contained in a category can be improved. The likelihood to contain a certain type of sensitive information in a category could be further improved on the basis of meta-data like the heading 20 of each category. E.g. the heading "name" in column 31 gives a strong indication that the column contains names. Such information is provided, e.g., by some database optimizers without additional data processing.

In one embodiment, the likelihoods of different type of sensitive information contained in a category or a field are combined to a likelihood to contain any sensitive information in the category or the field. In another embodiment, the likelihoods for different type of sensitive information are kept separate. In this case, the following steps would have to be performed for each type of sensitive information. Both embodiments could be combined such that some type of sensitive information is kept separate (e.g. credit card numbers), while other types of sensitive information are combined to a likelihood of combined type of sensitive information contained in a category.

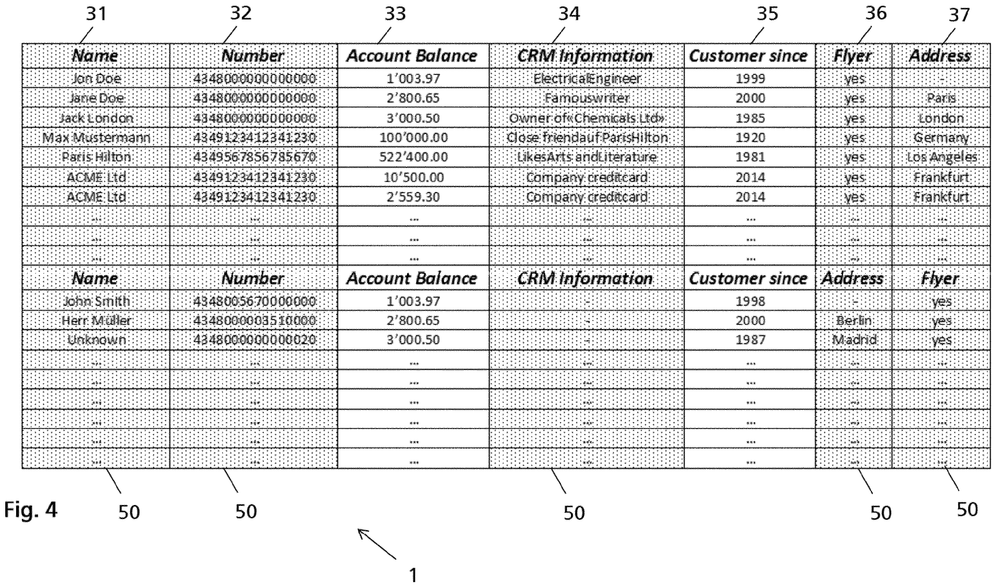

In a fourth step, a subset of categories is selected on the basis of the computed likelihoods of the categories to contain the sensitive information. This could be realized for example by a predetermined threshold. All categories which have a likelihood to contain the sensitive information larger than the threshold are included in the subset of categories. The threshold could be configurable by a user to define the degree of reliability of the method. Fig. 4 shows the subset 50 of columns 31, 32, 34, 36 and 37 which potentially contains the sensitive information. Due to the statistically representative subset 40 of rows, it was also detected that the column 36 contains potentially locations, even though in the first portion of rows it contains only a binary information tag. Therefore, the method detects reliably categories with potential sensitive information. In the case that different likelihoods per category for different types of sensitive information are computed, different subsets 50 of categories could be selected for each type of sensitive information. For example, a first subset containing the column 32 for credit card information and a second subset containing the columns 31, 34, 36 and 37 for names and locations could be determined.

In a fifth step, the sensitive information is searched in the selected subset 50 of categories. The same techniques as described for the scanning step could be used to search through the fields. For certain sensitive information which were detected only in one column it could be advantageous to have different subsets for different type of sensitive information, like for the credit card information in column 32. For certain sensitive information like names and location, a combined subset is more advantageous, because keywords and/or rules associated to different types of sensitive information must be searched only once in this subset to detect two different types of sensitive information.

In an optional step, the method could comprise a data loss prevention step, if potential sensitive information is found in the data. Possible data loss prevention steps are to document, to notify to a user and/or to block or quarantine the sensitive information found.

The term likelihood used in this application is preferably a value between 0 and 1. However, the term likelihood should also cover other values indicating a likelihood-like value like e.g. a score or a weight.

## Claims

1. Method for data loss prevention in data, wherein the data are structured and/or semi-structured data with a plurality of records and a plurality of categories, wherein each record comprises a plurality of fields each belonging to a different one of the categories, the method comprising the following steps:
selecting, in a processor, a subset of records of the data, wherein the subset is selected randomly on the basis of a certain statistical distribution;
scanning, in the processor, the fields of the selected subset of records for sensitive information;
computing, in the processor, for each category a likelihood to contain the sensitive information on the basis of the scanning result;
selecting, in the processor, a subset of categories on the basis of the computed likelihoods of the categories to contain the sensitive information;
searching, in the processor, the sensitive information in the fields belonging to the category in the selected subset of categories,
- wherein the fields of the selected subset of records are scanned for sensitive information by detecting a plurality of keywords and/or at least one rule in the fields of the selected subset of records,
- wherein each of the plurality of keywords and/or rules is associated to a likelihood to contain the sensitive information, and
- wherein the likelihood to contain the sensitive information in a category is computed based on the likelihood associated to the keyword(s) and/or rule(s) found in the category.

2. Method according to claim 1, wherein the certain statistical distribution is a uniform distribution.

3. Method according to claim 1 or 2, wherein the number of records of the subset of records is chosen on the basis of the number of records and/or on the number of unique records in the data.

4. Method according to one of the claims 1 to 3, wherein the number of records of the subset of records is chosen on the basis of a technical parameter of the infrastructure.

5. Method according to claim 4, wherein the technical parameter is a speed of the processor and/or a bandwidth of a communication link between a storage of the data and the processor.

6. Method according to one of the claims 1 to 5, wherein the likelihood to contain the sensitive information computed on the basis of the scanning result contains more than two possible values of likelihood.

7. Method according to one of claims 1 to 6, wherein the sensitive information comprises at least two types of sensitive information.

8. Method according to claim 7,
wherein each of the at least two types of sensitive information is scanned in the selected subset of records by detecting a plurality of keywords and/or at one least one rule,
wherein at least some of the keywords and/or the at least one rule are associated with different likelihoods to the at least two types of sensitive information,
wherein the likelihood of a category to contain one of the at least two types of sensitive information in a field is based on the likelihood of the keywords and/or the at least one rule associated to this type of sensitive information which are found in this category.

9. Method according to claim 8, wherein each keyword and/or rule associated to more of the at least two types of sensitive information are searched only once for detecting potential occurrences of all types of sensitive information related to the searched keyword and/or rule.

10. Computer program comprising instructions for performing the steps of the method of one of the previous claims, when executed on a processor.

11. Apparatus for data loss prevention comprising:
a storage comprising data which are structured and/or semi-structured data with a plurality of records and a plurality of categories, wherein each record comprises a plurality of fields each related to a different category,
a circuitry configured to perform the steps of the method of one of claims 1 to 9 on the data stored in the storage.

## Patentansprüche

1. Verfahren zur Verhinderung von Datenverlust in Daten, wobei die Daten strukturierte und/oder halbstrukturierte Daten mit einer Vielzahl von Datensätzen und einer Vielzahl von Kategorien sind, wobei jeder Datensatz eine Vielzahl von Feldern umfasst, die jeweils zu einer anderen der Kategorien gehören, und wobei das Verfahren die folgenden Schritte umfasst:
Auswahl einer Teilmenge von Datensätzen der Daten in einem Prozessor, wobei die Teilmenge zufällig auf der Grundlage einer bestimmten statistischen Verteilung ausgewählt wird;
Scannen der Felder der ausgewählten Teilmenge von Datensätzen in dem Prozessor auf sensible Informationen;
Berechnen, in dem Prozessor, für jede Kategorie eine Wahrscheinlichkeit, die sensiblen Informationen zu enthalten, auf der Grundlage des Ergebnisses des Scans;
Auswahl einer Untergruppe von Kategorien im Prozessor auf der Grundlage der berechneten Wahrscheinlichkeiten der Kategorien, die sensiblen Informationen zu enthalten;
Suchen, in dem Prozessor, der sensiblen Informationen in den Feldern, die zu der Kategorie in der ausgewählten Teilmenge von Kategorien gehören,
- wobei die Felder der ausgewählten Teilmenge von Datensätzen nach sensiblen Informationen gescannt werden, indem eine Vielzahl von Schlüsselwörtern und/oder mindestens eine Regel in den Feldern der ausgewählten Teilmenge von Datensätzen erkannt wird,
- wobei jedes aus der Vielzahl von Schlüsselwörtern und/oder Regeln mit einer Wahrscheinlichkeit verbunden ist, die sensible Information zu enthalten, und
- wobei die Wahrscheinlichkeit, dass die sensible Information in einer Kategorie enthalten ist, auf der Grundlage der Wahrscheinlichkeit berechnet wird, die mit dem/den Schlüsselwort(en) und/oder der/den Regel(n) verbunden ist, die in der Kategorie gefunden wurden.

2. Das Verfahren nach Anspruch 1, wobei die bestimmte statistische Verteilung eine Gleichverteilung ist.

3. Das Verfahren nach Anspruch 1 oder 2, wobei die Anzahl der Datensätze der Teilmenge der Datensätze auf der Grundlage der Anzahl der Datensätze und/oder der Anzahl der eindeutigen Datensätze in den Daten ausgewählt wird.

4. Das Verfahren nach einem der Ansprüche 1 bis 3, wobei die Anzahl der Datensätze der Teilmenge von Datensätzen auf der Grundlage eines technischen Parameters der Infrastruktur ausgewählt wird.

5. Das Verfahren nach Anspruch 4, wobei der technische Parameter eine Geschwindigkeit des Prozessors und/oder eine Bandbreite einer Kommunikationsverbindung zwischen einem Speicher der Daten und dem Prozessor ist.

6. Das Verfahren nach einem der Ansprüche 1 bis 5, wobei die auf Basis des Ergebnisses des Scans berechnete Wahrscheinlichkeit, die sensible Information zu enthalten, mehr als zwei mögliche Wahrscheinlichkeitswerte enthält.

7. Das Verfahren nach einem der Ansprüche 1 bis 6, wobei die sensiblen Informationen mindestens zwei Arten von sensiblen Informationen umfassen.

8. Das Verfahren nach Anspruch 7,
wobei jede der mindestens zwei Arten von sensiblen Informationen in der ausgewählten Teilmenge von Datensätzen durch Erkennung einer Vielzahl von Schlüsselwörtern und/oder mindestens einer Regel gescannt wird,
wobei mindestens einige der Schlüsselwörter und/oder die mindestens eine Regel mit unterschiedlichen Wahrscheinlichkeiten für die mindestens zwei Arten von sensiblen Informationen verbunden sind,
wobei die Wahrscheinlichkeit einer Kategorie, eine der mindestens zwei Arten sensibler Informationen in einem Feld zu enthalten, auf der Wahrscheinlichkeit der Schlüsselwörter und/oder der mindestens einen Regel basiert, die mit dieser Art sensibler Informationen assoziiert sind und in dieser Kategorie gefunden werden.

9. Das Verfahren nach Anspruch 8, wobei jedes Schlüsselwort und/oder jede Regel, die mit mehreren der mindestens zwei Arten sensibler Informationen verbunden sind, nur einmal durchsucht werden, um potenzielle Vorkommen aller Arten sensibler Informationen, die mit dem gesuchten Schlüsselwort und/oder der gesuchten Regel verbunden sind, zu erkennen.

10. Computerprogramm mit Anweisungen zur Durchführung der Schritte des Verfahrens nach einem der vorhergehenden Ansprüche, wenn es auf einem Prozessor ausgeführt wird.

11. Vorrichtung zur Verhinderung von Datenverlust, umfassend:
einen Speicher, der Daten umfasst, bei denen es sich um strukturierte und/oder halbstrukturierte Daten mit einer Vielzahl von Datensätzen und einer Vielzahl von Kategorien handelt, wobei jeder Datensatz eine Vielzahl von Feldern umfasst, die sich jeweils auf eine andere Kategorie beziehen,
eine Schaltung, die so konfiguriert ist, dass sie die Schritte des Verfahrens nach einem der Ansprüche 1 bis 9 an den in dem Speicher gespeicherten Daten durchführt.

## Revendications

1. Procédé de prévention de la perte de données dans des données, dans lequel les données sont des données structurées et/ou semi-structurées avec une pluralité d'enregistrements et une pluralité de catégories, dans lequel chaque enregistrement comprend une pluralité de champs appartenant chacun à une catégorie différente, le procédé comprenant les étapes suivantes :
sélectionner, dans un processeur, un sous-ensemble d'enregistrements des données, dans lequel le sous-ensemble est sélectionné de manière aléatoire sur la base d'une certaine distribution statistique ;
scanner, dans le processeur, les champs du sous-ensemble sélectionné d'enregistrements à la recherche d'informations sensibles ;
calculer, dans le processeur, pour chaque catégorie, une probabilité de contenir des informations sensibles sur la base du résultat de du scannage ;
sélectionner, dans le processeur, un sous-ensemble de catégories sur la base des probabilités calculées que les catégories contiennent les informations sensibles ;
rechercher, dans le processeur, les informations sensibles dans les champs appartenant à la catégorie dans le sous-ensemble sélectionné de catégories,
dans lequel les champs du sous-ensemble sélectionné d'enregistrements sont scannés à la recherche d'informations sensibles en détectant une pluralité de mots-clés et/ou au moins une règle dans les champs du sous-ensemble sélectionné d'enregistrements,
dans lequel chacun des mots-clés et/ou des règles est associé à une probabilité de contenir les informations sensibles, et
dans lequel la probabilité de contenir les informations sensibles dans une catégorie est calculée sur la base de la probabilité associée au(x) mot(s)-clé(s) et/ou à la(aux) règle(s) trouvée(s) dans la catégorie.

2. Procédé selon la revendication 1, dans lequel la distribution statistique donnée est une distribution uniforme.

3. Procédé selon la revendication 1 ou 2, dans lequel le nombre d'enregistrements du sous-ensemble d'enregistrements est choisi sur la base du nombre d'enregistrements et/ou du nombre d'enregistrements uniques dans les données.

4. Procédé selon l'une des revendications 1 à 3, dans lequel le nombre d'enregistrements du sous-ensemble d'enregistrements est choisi sur la base d'un paramètre technique de l'infrastructure.

5. Procédé selon la revendication 4, dans lequel le paramètre technique est une vitesse du processeur et/ou une bande passante d'une liaison de communication entre un stockage des données et le processeur.

6. Procédé selon l'une des revendications 1 à 5, dans lequel la probabilité de contenir les informations sensibles calculée sur la base du résultat du scannage contient plus de deux valeurs possibles de probabilité.

7. Procédé selon l'une des revendications 1 à 6, dans lequel les informations sensibles comprennent au moins deux types d'informations sensibles.

8. Procédé selon la revendication 7,
dans lequel chacun des au moins deux types d'informations sensibles est scanné dans le sous-ensemble sélectionné d'enregistrements en détectant une pluralité de mots-clés et/ou au moins une règle,
dans lequel au moins certains des mots-clés et/ou la au moins une règle sont associés à différentes probabilités pour les au moins deux types d'informations sensibles,
dans lequel la probabilité qu'une catégorie contienne l'un des au moins deux types d'informations sensibles dans un champ est basée sur la probabilité des mots-clés et/ou de la au moins une règle associée à ce type d'informations sensibles qui se trouvent dans cette catégorie.

9. Procédé selon la revendication 8, dans lequel chaque mot-clé et/ou règle associé à plusieurs des au moins deux types d'informations sensibles n'est recherché qu'une seule fois pour détecter les occurrences potentielles de tous les types d'informations sensibles liés au mot-clé et/ou à la règle recherché.

10. Programme informatique comprenant des instructions pour exécuter les étapes du procédé selon l'une des revendications précédentes, lorsqu'il est exécuté sur un processeur.

11. Dispositif pour la prévention de la perte de données comprenant :
un stockage comprenant des données structurées et/ou semi-structurées avec une pluralité d'enregistrements et une pluralité de catégories, dans lequel chaque enregistrement comprend une pluralité de champs, chacun lié à une catégorie différente,
un circuit configuré pour exécuter les étapes du procédé selon l'une des revendications 1 à 9 sur les données stockées dans la mémoire.
